# EUROPEAN PATENT SPECIFICATION

(11) **EP 3 383 642 B1**
(45) Date of publication and mention of the grant of the patent: **24.03.2021**
(21) Application number: 16837982.4
(22) Date of filing: 02.12.2016
(51) Int. Cl.: B32B 9/00, B32B 9/04, B32B 3/12, B32B 15/14, B32B 37/14, B32B 37/10, B32B 38/08, B32B 37/02

(54) **METHOD OF MAKING A MULTILAYER PANEL MADE OF COMPOSITE MATERIAL**
HERSTELLUNGSVERFAHREN EINER MEHRSCHICHTPLATTE AUS VERBUNDWERKSTOFF
PROCÉDÉ DE FABRICATION D'UN PANNEAU MULTICOUCHE EN MATERIAU COMPOSITE

(30) Priority: 02.12.2015 IT UB20156097
(43) Date of publication of application: 10.10.2018
(73) Proprietor: Marmi La Bella S.r.l., 37015 Domegliara (VR) (IT)
(72) Inventor: TESTI, Renato, 37010 Cavaion (VR) (IT)
(74) Representative: Maroscia, Antonio
(86) International application number: PCT/IB2016/057316
(87) International publication number: WO 2017/093967

(56) References cited:
- WO-A1-2012/000893
- CN-A- 101 173 557
- CN-A- 101 318 396
- CN-A- 102 535 789
- CN-U- 202 500 286
- IT-A1- MI20 091 316
- US-A1- 2004 076 771
- US-A1- 2005 003 148
- US-A1- 2012 061 871
- US-A1- 2012 258 278

## Description

### Field of the invention

The present invention generally finds application in the field of composite materials, particularly for use in the building and furnishing industries, and particularly relates to a method of making a multilayer panel made of composite material

### Background art

Multilayer panel made of composite materials have been long known to be used as internal and external cladding of surface walls in the building and furnishing industries.

Such panels typically comprise at least one stone slab of predetermined thickness, which is bonded to at least one reinforcement element adapted to impart strength to the slab while maintaining a low weight thereof.

Preferably, the reinforcement element comprises a metal or synthetic central core having a three-dimensional structure, e.g. a honeycomb structure, composed of cells and a pair of lattice sheets, adapted to be bonded to the flat surfaces of the core.

The reinforcement element is bonded to the slab at one of the sheets with one of the free surfaces of the slab.

Of course, the operator purchases the finished reinforcement element available on the market and later bonds it to the slab.

A first drawback of this arrangement is that the sheets of the reinforcement element must conform with the plan shape of the central core and are not easily adapted to the surface of the slab on which they have to be bonded, especially if the latter has projections and irregularities. This will result in imperfect adhesion of the reinforcement element to the slab, and will involve the risk that the latter may separate when the panel has been mounted.

A further drawback is that finished reinforcement elements are quite expensive and will add to the overall cost of the finished panel.

In an attempt to at least partially obviate these drawbacks, methods have been provided to make multilayer panels in which the reinforcement element is directly formed on the slab during assembly of the panel.

IT1385520 discloses a method of making multilayer panels as described hereinabove, which comprises a first step of providing a stone slab and a step of laying a fiberglass sheet on one of the faces of the slab with the interposition of a resin.

Then, a reinforcement element with a central core having a surface covered with an additional fiberglass sheet and a free surface is bonded to the first fiberglass sheet and then to the slab using the previously laid resin.

In order to facilitate adhesion of the various components, the panel so formed is first introduced into a hermetically sealed plastic bag to create vacuum and then in a furnace for the resin to be cured by heating.

A first drawback of this prior art arrangement is that the reinforcement element in use is purchased in an almost entirely finished form, and cannot obviate the aforementioned drawbacks.

Furthermore, the method has no intermediate step for promoting adhesion between the parts of the reinforcement element, the sheets and the slab, which will maintain a high risk of separation thereof after assembly.

A further drawback is that the plant for carrying out the present method is required to comprise a furnace for heating and curing the resin, which will add to the overall manufacturing costs.

WO 2012/000893 A1 discloses another method for producing a slab of stone material which is reinforced by a naked honeycomb structure without covering skins having empty cells, by at least one woven fabric made of fiberglass and by a structural resin characterized in that it comprises the following steps: pouring said structural resin on a face of a first woven fabric until impregnation of said fabric; making said honeycomb structure to rest on said structural resin impregnated face of fabric, and performing a first warm maturation of the resin; adhering the open face of the honeycomb obtained by said first maturation, to the back of said stone slab by means of the structural resin, and performing a second maturation of the obtained assembled article, wherein the open face of the honeycomb structure previously maturated is adhered to a second woven fabric which is already placed on the back of the stone slab and then impregnated with the structural resin, characterized in that in the maturation the assembled article is warmed up, preferably in a suitable oven, for a given time, temperature and pressure, preferably at a temperature comprised between 30°C and 70° C and under a pressure comprised between vacuum and 1 atm.

### Technical Problem

In light of the prior art, the technical problem addressed by the invention may be deemed to consist in providing a method of making a multilayer panel that can improve adhesion of the reinforcement element with the sheet mats and the slab, thereby reducing the overall manufacturing costs.

### Summary of the invention

The object of the present invention is to solve the above mentioned technical problem and obviate the above discussed drawback, by providing a method of making a multilayer panel made of composite material that is highly efficient and relatively cost-effective.

A particular object of the present invention is to provide a method of making a multilayer panel made of composite material that improves adhesion of the reinforcement element to the stone slab.

Another object of the present invention is to provide a method of making a multilayer panel made of composite material that has a particularly low cost.

A further object of the present invention is to provide a method of making a multilayer panel made of composite material that is particularly simple.

Yet another object of the present invention is to provide a method as described above that allow the panel to be formed through a small number of steps.

These and other objects, as better explained below, are fulfilled by a method of making a multilayer panel made of composite material as defined in claim 1 and comprising an intermediate step and a final step in which vacuum is created on the reinforcement element and the panel respectively.

By this arrangement, a multilayer panel made of composite material may be formed, in which the parts are optimally bonded together. Furthermore, the method has the advantage of being particularly simple and of reducing the overall manufacturing costs for the panel.

In the invention all the method steps are carried out at ambient temperature and at a substantially constant pressure.

Furthermore, the permanence times of the various multilayer assemblies have a substantially equal average duration, ranging from 8 h to 15 h, about 12 h.

Conveniently, the adhesive resin is selected from the group comprising two-component epoxy resins.

Advantageous embodiments of the invention are obtained in accordance with the dependent claims.

### Brief description of the drawings

Further characteristics and advantages of the invention will be more apparent from the detailed description of a preferred, non-exclusive embodiment of a method of making a multilayer panel made of composit material of the invention, which is described
as a non-limiting example with the help of the annexed drawings, in which:
FIG. 1 is a block diagram of a first embodiment of the method of the invention;
FIG. 2 is a block diagram of a second embodiment of the method of the invention;
FIGS 3a to 3i are broken-away lateral views which depict the steps of the method of making a multilayer panel according to a first embodiment;
FIG. 4 is an exploded perspective view of a first embodiment of a multilayer panel made of composite material;
FIG. 5 is a broken-away lateral view of a second embodiment of a multilayer panel obtained with the method of the invention.

### Detailed description of a preferred exemplary embodiment

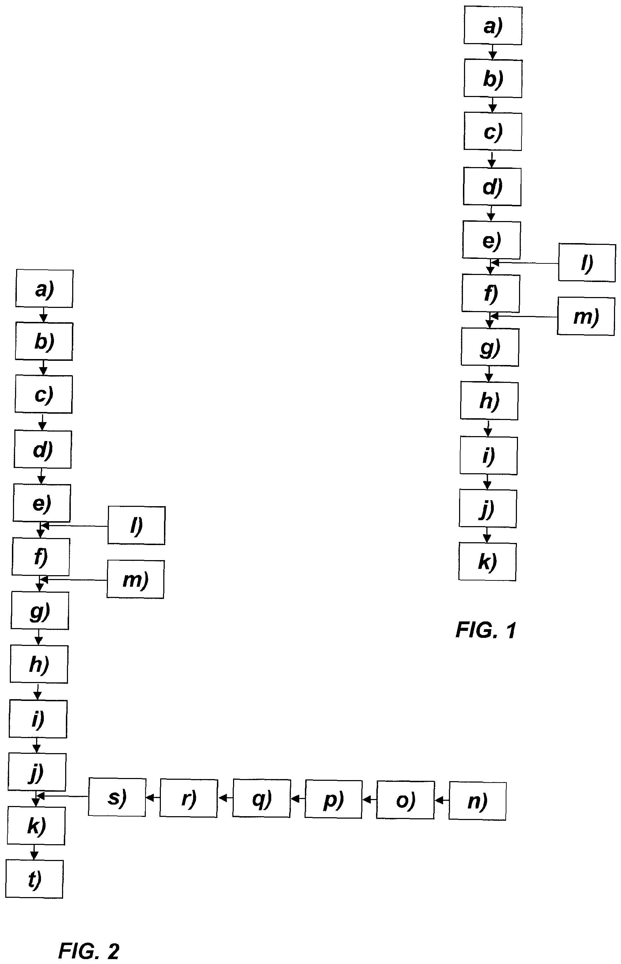

Referring to the figures, particularly FIGS. 1 and 2 show a method of making a multilayer panel made of composite material, which is suitable for use, preferably but without limitation, in the building and furnishing industries, not only for ground-based constructions, but also for nautical and aeronautical engineering.

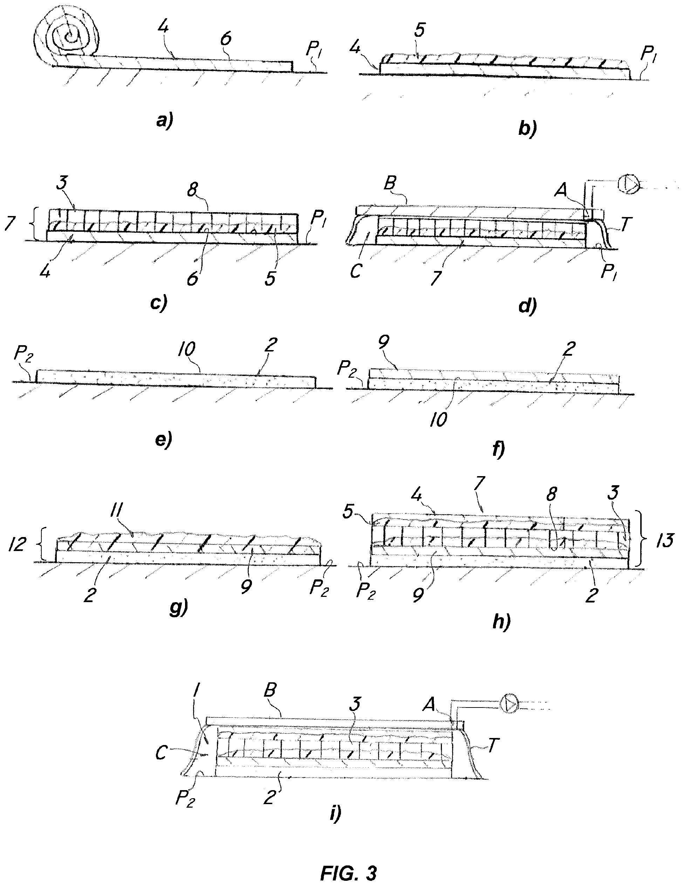

As best shown in FIGS. 3i, 4 and 5, the multilayer panel made of composite material obtained with the method of the invention, generally designated by numeral 1, comprises at least one slab 2 made of a stone material such as marble or the like, and at least one reinforcement layer 3, having a three-dimensional honeycomb structure, which is bonded to the slab 2.

The panel 1 may be used as cladding or flooring for walls and surfaces, for residential, industrial or marine applications, e.g. for interior furnishings of yachts, and may be attached to respective surfaces by appropriate high-strength adhesives or mechanical fastener means.

The peculiar feature of the panel 1 is that the reinforcement element 3 imparts high mechanical strength to the slab 2, thereby preventing breaking or detachment thereof, and allowing the panel 1 to have a very light-weight structure.

According to the invention, as shown in the block diagram of FIG. 1 and in FIGS. 3A-3i, the method comprises a step of a) providing a first sheet-like fiberglass mat 4 and laying it on a first support plan P₁.

The first mat 4 has a predetermined plan shape.

Furthermore, the first mat 4 is initially rolled up and the operator in charge of making the panel 1 will have to unroll it above the support plan P₁ and cut a portion of desired size therefrom.

The operator shall lay the first mat 4 on the support plan P₁ while avoiding the formation of wrinkles or gathers thereof, which might affect the later steps of forming the panel 1.

Then, a second step is provided of b) laying a first layer of adhesive resin 5 on the top face 6 of the first mat 4, i.e. the face that does not contact the support plan P₁, as shown in Fig. 3b.

The adhesive resin 5 may be selected from the group comprising two-component epoxy resins and will be laid upon the first mat 4 until the latter is entirely impregnated therewith.

The method comprises a step of c) providing a three-dimensional honeycomb reinforcement element 3 whose plan size is slightly smaller than the first mat 4, as shown in FIG. 3c.

The reinforcement element 3 substantially corresponds to the metal core of common available honeycomb panels.

The reinforcement element 3 is laid over the first mat 4 until it is at least partially embedded in the first layer of adhesive resin 5 and forms therewith a first assembly 7 with a free upper face 8.

The step c) is followed by a step of d) overlaying the first assembly 7 with an impermeable sheet T sealingly lying over the first support plan P₁ and defining a watertight cavity C, as shown in FIG. 3d.

The sheet T is mounted to a support B which is adapted to lie over the first assembly 7 and comprises a top opening A whose purpose will be better explained hereinafter.

A step will follow, of e) connecting the cavity C that contains the first assembly 7 to a vacuum source for a first predetermined time interval to promote adhesion of the reinforcement element 3 to the first mat 4, as shown in FIG. 3d.

Advantageously, the vacuum source may comprise a suction pump and the cavity C may be connected thereto through the top opening A formed on the support B.

The support B with the impermeable sheet T may be used with different types of support surfaces without altering the desired vacuum conditions and may have standard sizes, allowing it to overlap reinforcement elements 3 of different sizes.

Furthermore, this arrangement allows the operator to create vacuum by directly acting on the support plan P₁, without moving the reinforcement element 1 being processed.

Meanwhile, a step is carried out of f) providing a stone slab 2 whose size substantially corresponds to that of the first assembly 7 and laying it over a second support plan P₂, as clearly shown in FIG. 3e.

Possibly, prior to the step of f) providing the slab 2 on the second support plan P₂, a step may be envisaged of l) leveling and reducing the surface ruggedness of the face 10 of the slab 2, for improved adhesion of the second mat 9.

A step is also provided, as shown in FIG. 3f, of g) providing a second mat 9 and laying it over the slab 2, particularly over the free face 10 of the latter, which does not contact the second support plan P₂.

The second mat 9, like the first mat, is made of fiberglass and has substantially the same size as the stone slab 2.

Prior to the step g) a step may be provided of m) washing the free face 10 of the slab 2 with a high-pressure waterjet treatment machine using a high-pressure pump, not shown. Namely, this machine is connected to a pump having a pressure of about 2000 bar.

Similar to what has been discussed above, a step is later provided, as shown in FIG. 3g, of h) laying a second layer of adhesive resin 11 on the second mat 9 to impregnate it and promote its adhesion to the slab 2 to define a second assembly 12.

The resin 11 that is used for bonding the second mt 9 may also be selected from the group comprising two-component epoxy resins.

Advantageously, as the second mat 9 is laid on the free face 10 of the slab 2, the surface of the latter may be leveled and its ruggedness may be substantially smoothened out.

Finally, the above discussed washing step m) can remove dust from the free face 10 of the slab 2 and create surface loops thereon to increase the adhesion surface with the second resin layer 11 laid during the step h).

Once the support B has been removed from the first working plan P₁, a step is provided of i) turning the first assembly 7 upside down and laying it on the second assembly 12, as shown in FIG. 3h.

The first assembly 7 is laid over the second assembly 12 with its free face 8 at least partially embedded in the second layer of adhesive resin 11 to obtain a third assembly 13.

Advantageously, the use of the second resin layer 11 to bond both the second mat 9 to the slab 2 and the first assembly 7 to the second assembly 12 can reduce the total amount of resin required to form the panel 1 and the overall time for making it.

The method comprises a step of j) overlaying the third assembly 13 with an impermeable sheet T sealingly lying over the second support plan P₂ and defining a cavity C.

A step will follow, of k) connecting the cavity C that contains the third assembly 13 to a vacuum source for a second predetermined time interval to promote adhesion of the reinforcement element 3 to the first mat 4 and the second mat 9 and obtain a finished multilayer panel 1, as shown in FIG. 3i.

Similar to step d), the impermeable sheet T is mounted to a rigid support B having a top opening A for connection of the cavity C with the vacuum source.

Steps a) to k) are carried out at ambient temperature and steps e) and k) may have a substantially equal average duration, ranging from 8h to 15h, substantially close to 12h.

Thus, adhesion of the reinforcement element 3 to the slab 2 is only improved by creating vacuum, without changing the temperature of the adhesive resin.

Also, since the use of a device for heating the panel 1 and drying the resin is avoided, it greatly simplifies the method and reduces its overall implementation costs.

Furthermore, the steps e) and k) of creating vacuum on the first assembly 7 and the third assembly 13 respectively within the cavity C may be carried out at a constant pressure, substantially close to 0.6 bar.

In a further embodiment of the invention, as shown in the block diagram of FIG. 2, the method may comprise, prior to the step of k) creating vacuum, a step of n)providing a third sheet-like fiberglass mat 14 of substantially the same size as the slab 2.

Also, the step n) includes lying a third layer of adhesive resin 15 on the third mat 14 and is followed by a step of o) overlying the third layer of resin 15 with a second honeycomb reinforcement element 16 to obtain a fourth assembly 17.

Then, the support B with the sheet T is laid over the fourth assembly 17 to define the cavity C and is connected to the vacuum source, similar to what has been discussed above for the previous steps e) and k), for a third predetermined time interval, to facilitate adhesion between the third mat 14 and the second honeycomb reinforcement element 16.

A step is further provided of p) providing a fourth fiberglass mat 18 of substantially the same size as the slab 2 and a step is provided of laying the fourth mat 18 on the free face 19 of the slab 2 of the third assembly 13 obtained in the step i) of the original method.

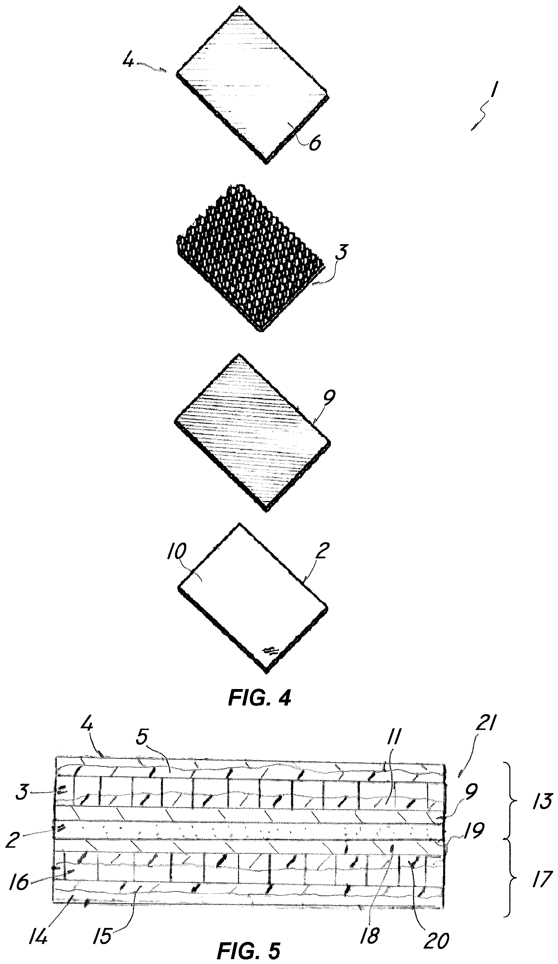

The step q) is followed by a step of r) laying a fourth layer of adhesive layer 20 on the fourth mat 18 to impregnate it and promote bonding thereof to the slab 2, and by a step of s) laying the second honeycomb element 16 on the fourth mat 18 to promote bonding of the slab 2 of the intermediate panel 21, as shown in FIG. 5.

Finally, the method may include, downstream from the step k), a step of t) detaching the slab 2 of the intermediate panel 21 to obtain a pair of half-panels 1', not shown, each with a half-plate 2' having half the thickness of the slab 2 and with a corresponding reinforcement element 3, 16.

In both embodiments of the method, the stone slabs and the reinforcement elements may have different shapes, sizes and thicknesses.

Advantageously, in one embodiment, not shown, the reinforcement element 3 may comprise holes located in predetermined positions for receiving respective bushings.

The bushings will be adapted to support means for hanging the multilayer panel 1 on a wall. Particularly, the hanging means may comprise a plurality of brackets with respective grooves, and a plurality of metal profiles affixed to the wall and having respective mating grooves for receiving and engaging the brackets.

In an alternative embodiment of the invention, also not shown, the holes for receiving the bushings may be formed in the slab 2.

While the method has been described with particular reference to the accompanying figures, the numerals referred to in the disclosure and claims are only used for the sake of a better intelligibility of the invention and shall not be intended to limit the claimed scope in any manner.

### Industrial Applicability

The present invention may find application in industry, because it can be produced on an industrial scale in factories in the field of stone slab processing, particularly for the building and furnishing industries.

## Claims

1. A method of making a multilayer panel made of composite material (1), which method comprises the steps of:
a) providing a first fiberglass mat (4) of a predetermined plan size;
b) laying a first layer of adhesive resin (5) on the upper face (6) of said first mat (4);
c) providing a three-dimensional honeycomb reinforcement element (3) having a plan size slightly smaller than that of said first mat (4) and laying it over said first mat (4) to embed it at least partially in said first layer of adhesive resin (5) and form a first assembly (7) having a free upper face (8);
f) providing a stone slab (2) of substantially the same size as the first multilayer assembly (7)
g) providing a second sheet-like fiberglass mat (9) of substantially the same size as said stone slab (2) and laying it over said slab (2);
h) laying a second layer of adhesive resin (11) on said second mat (9) to impregnate it and promote adhesion thereof to said slab (2), to define a second multilayer assembly (12);
**characterized in that** said first multilayer assembly (7) is prepared on a first support plan (P₁) and after step c) is subjected to the following steps:
d) overlying said first multilayer assembly (7) with an impermeable sheet (T) sealingly lying over said first support plan (P₁) and defining a first hermetic cavity (C);
e) connecting said first hermetic cavity (C) to a vacuum source for a first predetermined time interval to promote adhesion of said reinforcement element (3) to said first mat (4);
further **characterized in that** said second multilayer assembly (12) is prepared on a second support plane (P₂) different from the first one (P₁) and after step h) is subjected to the following steps:
i) turning said first multilayer assembly (7) upside down and laying it over said second multilayer assembly (12), with the free face (8) of said first multilayer assembly (7) at least partially embedded in said second layer of adhesive resin (11) to obtain a third multilayer assembly (13);
j) overlaying said third multilayer assembly (13) with the impermeable sheet (T) sealingly lying over the second support plan (P2) and defining a second hermetic cavity (C);
k) connecting said second hermetic cavity (C) to a vacuum source for a second predetermined time interval to promote adhesion of said reinforcement element (3) to said first mat (4) and to said second mat (9) and to obtain an intermediate panel (21) or a finished panel (1);
and further **characterized in that** all the steps a) to k) are carried out at ambient temperature to avoid any heating and warming oven.

2. A method as claimed in claim 1, **characterized in that** said first and second predetermined times of said steps e) and k) have a substantially equal average duration.

3. A method as claimed in claim 2, **characterized in that** said average duration ranges from 8h to 15h and is substantially close to 12h.

4. A method as claimed in claim 1, **characterized in that** said steps e) and k) of creating vacuum in said cavity (C) are carried out at a constant pressure.

5. A method as claimed in claim 1, **characterized in that** said adhesive resin is selected from the group comprising two-component epoxy resins.

6. A method as claimed in claim 1, **characterized in that** it comprises, prior to said step of f) providing said slab (2) on the second support plan (P₂), a step of l) leveling and reducing the surface ruggedness of the face (10) of said slab (2) which is overlaid with said second resin layer (11).

7. A method as claimed in claim 1, **characterized in that** it comprises, prior to said step of g) laying a second mat (9) over the slab (2), a step of m) washing the surface of the slab (2) with a high-pressure waterjet treatment machine using a high-pressure pump, to form surface loops thereon and increase the adhesion surface for the second resin layer (11) during the overlaying step h).

8. A method as claimed in claim 1, **characterized in that** it includes, prior to said step k), a step of n) providing a third sheet-like fiberglass mat (14) of substantially the same size as said slab (2) and laying a third layer of adhesive resin (15) thereon, followed by a step of o) laying a second honeycomb reinforcement element (16) over said third resin layer (15) to obtain a fourth multilayer assembly (17).

9. A method as claimed in claim 8, **characterized in that** said impermeable sheet (T) is laid on the fourth assembly (17) and sealingly lies on the support surface to define a cavity (C), said cavity (C) being connected to a vacuum source for a third predetermined time to promote adhesion between said third mat (14) and said second honeycomb reinforcement element (16).

10. A method as claimed in claim 9, **characterized in that** it comprises a step p) of providing a fourth fiberglass mat (18) of substantially the same size as said slab (2), a step q) of lying said fourth mat (18) on the free face (19) of said slab (2), a step r) of lying a fourth layer of adhesive resin (20) on said fourth mat (18) to impregnate it and promote bonding thereof to said slab (2), a step s) of laying said second honeycomb element (16) of said fourth assembly (17) on said fourth mat (18) to promote bonding thereof to said intermediate panel (21) and a step t) of detaching said slab (2) of said intermediate panel (21), downstream from said step (k), to obtain a pair of half-panels (1'), each comprising a half-plate (2') and a respective reinforcement element (3, 16).

11. A method as claimed in claim 1, **characterized in that** said honeycomb reinforcement element (3) comprises a plurality of holes located in predetermined positions for receiving respective bushings which are adapted to support means for hanging the multilayer panel (1) on a wall.

12. A method as claimed in claim 1, **characterized in that** said slab (2) comprises a plurality of holes located in predetermined positions for receiving respective bushings which are adapted to support means for hanging the multilayer panel (1) on a wall.

## Patentansprüche

1. Verfahren zur Herstellung einer Mehrschichtplatte aus Verbundmaterial (1), wobei das Verfahren die folgenden Schritte umfasst:
a) Bereitstellen einer ersten Glasfasermatte (4) mit einer vorbestimmten Plangröße;
b) Aufbringen einer ersten Schicht Klebstoffharz (5) auf die Oberseite (6) der ersten Matte (4);
c) Bereitstellen eines dreidimensionalen Wabenverstärkungselements (3) mit einer Plangröße, die geringfügig kleiner als die der ersten Matte (4) ist, und Legen es über die erste Matte (4), um es zumindest teilweise in die erste Klebstoffharzschicht (5) einzubetten und eine erste Anordnung (7) mit einer freien Oberseite (8) zu bilden;
f) Bereitstellen einer Steinplatte (2) von im wesentlichen derselben Größe wie die erste Mehrschichtanordnung (7);
g) Bereitstellen einer zweiten blattartigen Glasfasermatte (9) von im wesentlichen derselben Größe wie die Steinplatte (2) und Verlegen dieser über der Platte (2);
h) Aufbringen einer zweiten Schicht Klebstoffharz (11) auf die zweite Matte (9), um sie zu imprägnieren und ihre Haftung an der Platte (2) zu fördern, um eine zweite Mehrschichtanordnung (12) zu definieren;
**dadurch gekennzeichnet, dass** die erste Mehrschichtanordnung (7) auf einem ersten Stützplan (P₁) hergestellt und nach Schritt c) den folgenden Schritten unterzogen wird:
d) Überlagern der ersten Mehrschichtanordnung (7) mit einer undurchlässigen Folie (T), die dicht über dem ersten Stützplan (P₁) liegt und einen ersten hermetischen Hohlraum (C) definiert;
e) Verbinden des ersten hermetischen Hohlraums (C) mit einer Vakuumquelle für ein erstes vorbestimmtes Zeitintervall, um die Haftung des Verstärkungselements (3) an der ersten Matte (4) zu fördern;
weiter **dadurch gekennzeichnet, dass** die zweite Mehrschichtanordnung (12) auf einer zweiten Trägerebene (P₂) hergestellt wird, die sich von der ersten (P₁) unterscheidet, und nach Schritt h) den folgenden Schritten unterzogen wird:
i) Drehen der ersten Mehrschichtanordnung (7) verkehrt herum und Legen sie über die zweite Mehrschichtanordnung (12), wobei die freie Fläche (8) der ersten Mehrschichtanordnung (7) zumindest teilweise in die zweite Schicht aus Klebharz eingebettet ist (11), um eine dritte Mehrschichtanordnung (13) zu erhalten;
j) Überlagern der dritten Mehrschichtanordnung (13) mit der undurchlässigen Folie (T), die dicht über dem zweiten Stützplan (P₂) liegt, und Definieren eines zweiten hermetischen Hohlraums (C);
k) Verbinden des zweiten hermetischen Hohlraums (C) mit einer Vakuumquelle während eines zweiten vorbestimmten Zeitintervalls, um die Haftung des Verstärkungselements (3) an der ersten Matte (4) und an der zweiten Matte (9) zu fördern um eine Zwischenplatte (21) oder eine fertige Platte (1) zu erhalten;
und weiter **dadurch gekennzeichnet, dass** alle Schritte a) bis k) bei Umgebungstemperatur ausgeführt werden, um jegliches Erhitzen und Erwärmen des Ofens zu vermeiden.

2. Verfahren nach Anspruch 1, **dadurch gekennzeichnet, dass** die erste und zweite vorbestimmte Zeit der Schritte e) und k) eine im wesentlichen gleiche durchschnittliche Dauer haben.

3. Verfahren nach Anspruch 2, **dadurch gekennzeichnet, dass** die durchschnittliche Dauer im Bereich von 8 h bis 15 h liegt und im wesentlichen nahe bei 12 h liegt.

4. Verfahren nach Anspruch 1, **dadurch gekennzeichnet, dass** die Schritte e) und k) zur Erzeugung eines Vakuums in dem Hohlraum (C) bei einem konstanten Druck durchgeführt werden.

5. Verfahren nach Anspruch 1, **dadurch gekennzeichnet, dass** das Klebstoffharz aus der Gruppe von Zweikomponenten-Epoxidharzen ausgewählt ist.

6. Verfahren nach Anspruch 1, **dadurch gekennzeichnet, dass** es vor dem Schritt f), Bereitstellen der Platte (2) auf dem zweiten Stützplan (P₂), einen Schritt l) von Nivellieren und Verringern der Oberflächenrauheit der Fläche (10) der Platte (2) umfasst, die mit der zweiten Harzschicht (11) überzogen ist.

7. Verfahren nach Anspruch 1, **dadurch gekennzeichnet, dass** es vor dem Schritt g), das Auflegen einer zweiten Matte (9) über die Platte (2), einen Schritt m), das Waschen der Oberfläche der Platte (2) mit einer Hochdruck-Wasserstrahlbehandlungsmaschine unter Verwendung einer Hochdruckpumpe umfasst, um darauf Oberflächenschleifen zu bilden und die Haftfläche für die zweite Harzschicht (11) während des Überzugsschritts h) zu erhöhen.

8. Verfahren nach Anspruch 1, **dadurch gekennzeichnet, dass** es vor dem Schritt k) einen Schritt n), Bereitstellen einer dritten blattartigen Glasfasermatte (14) mit im wesentlichen der gleichen Größe wie die Platte (2), und Aufbringen einer dritten Schicht eines Klebharzes (15) darauf aufweist, gefolgt von einem Schritt o), Aufbringen eines zweiten Wabenverstärkungselements (16) über die dritte Harzschicht (15), um eine vierte Mehrschichtanordnung (17) zu erhalten.

9. Verfahren nach Anspruch 8, **gekennzeichnet dadurch, dass** die undurchlässige Folie (T) auf die vierte Anordnung (17) gelegt wird und abdichtend auf der Auflagefläche liegt, um einen Hohlraum (C) zu definieren, wobei der Hohlraum (C) an eine Vakuumquelle für eine dritte vorbestimmte Zeit angeschlossen ist, um die Haftung zwischen der dritten Matte (14) und dem zweiten Wabenverstärkungselement (16) zu fördern.

10. Verfahren nach Anspruch 9, **dadurch gekennzeichnet, dass** es die folgende Schritte umfasst Schritt p), Bereitstellen einer vierten Glasfasermatte (18) mit im wesentlichen der gleichen Größe wie die Platte (2), Schritt q), Auftragen der vierten Matte (18) auf der freien Fläche (19) der Platte (2), Schritt r), Auftragen einer vierten Schicht Klebharz (20) auf die vierte Matte (18) um sie zu imprägnieren und ihre Bindung an die Platte zu fördern (2), Schritt s), Auflegen des zweiten Wabenelements (16) der vierten Anordnung (17) auf die vierte Matte (18), um seine Bindung an die Zwischenplatte (21) zu fördern, und Schritt t), Abnehmen der Platte (2) der Zwischenplatte (21) stromabwärts von dem Schritt (k), um ein Paar von Halbplatten (1') zu erhalten, die jeweils eine Halbplatte (2') und ein entsprechendes Verstärkungselement (3, 16) umfassen.

11. Verfahren nach Anspruch 1, **dadurch gekennzeichnet, dass** das Wabenverstärkungselement (3) mehrere Löcher umfasst, die sich in vorbestimmten Positionen zum Aufnehmen der jeweiligen Buchsen befinden, die dazu ausgelegt sind, Mittel zum Aufhängen der Mehrschichtplatte (1) an einer Wand zu tragen.

12. Verfahren nach Anspruch 1, **dadurch gekennzeichnet, dass** die Platte (2) mehrere Löcher umfasst, die sich in vorbestimmten Positionen befinden, um entsprechende Buchsen aufzunehmen, die dazu ausgelegt sind, Mittel zum Aufhängen der Mehrschichtplatte (1) an einer Wand zu tragen.

## Revendications

1. Procédé de fabrication d'un panneau multicouche en matériau composite (1), lequel procédé comprend les étapes de:
a) fournir une première natte de fibre de verre (4) d'une taille en plan prédéterminée;
b) déposer une première couche de résine adhésive (5) sur la face supérieure (6) de ladite première natte (4);
c) fournir un élément de renforcement en nid d'abeille tridimensionnel (3) ayant une taille en plan légèrement inférieure que celle de ladite première natte (4) et le déposer sur ladite première natte (4) pour l'intégrer au moins partiellement dans ladite première couche de résine adhésive (5) formant ainsi un premier assemblage (7) ayant une face supérieure libre (8);
f) fournir une dalle de pierre (2) sensiblement de la même taille que le premier assemblage multicouche (7);
g) fournir une deuxième natte de fibre de verre en forme de feuille (9) sensiblement de la même taille que ladite dalle de pierre (2) et le poser sur ladite dalle (2);
h) déposer une seconde couche de résine adhésive (11) sur ladite deuxième natte (9) pour l'imprégner et favoriser son adhésion à ladite dalle (2), pour définir un second assemblage multicouche (12);
**caractérisé en ce que** ledit premier assemblage multicouche (7) est préparé sur un premier plan de support (P₁) et après l'étape c) est soumis aux étapes suivantes:
d) recouvrir ledit premier assemblage multicouche (7) avec une feuille imperméable (T) s'étendant de manière étanche sur ledit premier plan de support (P₁) et définissant une première cavité hermétique (C);
e) connecter ladite première cavité hermétique (C) à une source de vide pendant un premier intervalle de temps prédéterminé pour favoriser l'adhésion dudit élément de renforcement (3) à ladite natte (4);
**caractérisé en outre en ce que** ledit deuxième assemblage multicouche (12) est préparé sur un deuxième plan de support (P₂) différent du premier (P₁) et après l'étape h) est soumis aux étapes suivantes:
i) tourner à l'envers ledit premier assemblage multicouche (7) et le déposer sur ledit second assemblage multicouche (12), avec la face libre (8) dudit premier assemblage multicouche (7) au moins partiellement noyée dans ladite seconde couche de résine adhésive (11) pour obtenir un troisième assemblage multicouche (13);
j) superposer ledit troisième assemblage multicouche (13) avec la feuille imperméable (T) reposant de manière étanche sur le deuxième plan de support (P₂) et définir une deuxième cavité hermétique (C);
k) connecter ladite seconde cavité hermétique (C) à une source de vide pendant un second intervalle de temps prédéterminé pour favoriser l'adhésion dudit élément de renforcement (3) à ladite première natte (4) et à ladite deuxième natte (9) et pour obtenir un panneau intermédiaire (21) ou panneau fini (1);
et **caractérisé en outre en ce que** toutes les étapes a) à k) sont réalisées à température ambiante pour éviter tout chauffage et réchauffement du four.

2. Procédé selon la revendication 1, **caractérisé en ce que** lesdits premier et second intervalle de temps prédéterminés desdites étapes e) et k) ont une durée moyenne sensiblement égale.

3. Procédé selon la revendication 2, **caractérisé en ce que** ladite durée moyenne est comprise entre 8h et 15h et est sensiblement proche de 12h.

4. Procédé selon la revendication 1, **caractérisé en ce que** lesdites étapes e) et k) de création de vide dans ladite cavité (C) sont effectuées à une pression constante.

5. Procédé selon la revendication 1, **caractérisé en ce que** ladite résine adhésive est choisie dans le groupe comprenant les résines époxy à deux composants.

6. Procédé selon la revendication 1, **caractérisé en ce qu'**il comprend, avant ladite étape f) de fourniture de ladite dalle (2) sur le deuxième plan de support (P₂), une étape l) de nivellement et réduction de la rugosité de surface de la face (10) de ladite plaque (2) qui est recouverte de ladite seconde couche de résine (11).

7. Procédé selon la revendication 1, **caractérisé en ce qu'**il comprend, préalablement à ladite étape g) de pose d'un deuxième tapis (9) sur la dalle (2), une étape m) de lavage de la surface de la dalle (2) avec une machine de traitement par jet d'eau haute pression utilisant une pompe haute pression, pour former des boucles de surface sur celle-ci et augmenter la surface d'adhérence pour la deuxième couche de résine (11) pendant l'étape de recouvrement h).

8. Procédé selon la revendication 1, **caractérisé en ce qu'**il comprend, préalablement à ladite étape k), une étape n) de fourniture d'une troisième natte de fibre de verre en forme de feuille (14) sensiblement de la même taille que ladite dalle (2) et la pose d'une troisième couche de résine adhésive (15) sur celle-ci, suivie d'une étape o) de pose d'un deuxième élément de renforcement en nid d'abeille (16) sur ladite troisième couche de résine (15) pour obtenir un quatrième assemblage multicouche (17).

9. Procédé selon la revendication 8, **caractérisé en ce que** ladite feuille imperméable (T) est posée sur le quatrième ensemble (17) et repose de manière étanche sur la surface de support pour définir une cavité (C), ladite cavité (C) étant reliée à une source de vide pendant un troisième temps prédéterminé pour favoriser l'adhérence entre ladite troisième natte (14) et ledit deuxième élément de renforcement en nid d'abeille (16).

10. Procédé selon la revendication 9, **caractérisé en ce qu'**il comprend une étape p) consistant à prévoir une quatrième natte en fibre de verre (18) sensiblement de la même taille que ladite dalle (2), une étape q) de couchage de ladite quatrième natte (18) sur la face libre (19) de ladite dalle (2), une étape r) consistant à déposer une quatrième couche de résine adhésive (20) sur ladite quatrième natte (18) pour l'imprégner et favoriser son collage sur ladite dalle (2), une étape s) de pose dudit deuxième élément en nid d'abeille (16) dudit quatrième assemblage (17) sur ladite quatrième natte (18) pour favoriser son collage sur ledit panneau intermédiaire (21) et une étape t) de détachement de ladite dalle (2) dudit panneau intermédiaire (21), en aval de ladite étape (k), pour obtenir une paire de demi-panneaux (1'), comprenant chacun une demi-plaque (2') et un élément de renforcement respectif (3, 16).

11. Procédé selon la revendication 1, **caractérisé en ce que** ledit élément de renforcement en nid d'abeille (3) comprend une pluralité de trous situés dans des positions prédéterminées pour recevoir des douilles respectives qui sont adaptées à des moyens de support pour accrocher le panneau multicouche (1) sur un mur.

12. Procédé selon la revendication 1, **caractérisé en ce que** ladite dalle (2) comprend une pluralité de trous situés dans des positions prédéterminées pour recevoir des douilles respectives qui sont adaptées à des moyens de support pour accrocher le panneau multicouche (1) sur une paroi.
